# EUROPEAN PATENT SPECIFICATION

(11) **EP 2 799 249 B1**
(45) Date of publication and mention of the grant of the patent: **11.04.2018**
(21) Application number: 12861942.6
(22) Date of filing: 28.12.2012
(51) Int. Cl.: B60C 11/00, B29C 33/02, B29L 30/00, B29D 30/06, B60C 11/11, B29D 30/66

(54) **TIRE AND TIRE MOLDING CAST**
REIFEN UND REIFENGUSSFORMEN
PNEUMATIQUE ET CONTRE-EMPREINTE DE MOULAGE DE PNEUMATIQUE

(30) Priority: 28.12.2011 JP 2011289800
(43) Date of publication of application: 05.11.2014
(73) Proprietor: Bridgestone Corporation, Tokyo 104-8340 (JP)
(72) Inventor: AMANO, Masakazu, Kodaira-shi Tokyo 187-8531 (JP)
(74) Representative: Oxley, Robin John George
(86) International application number: PCT/JP2012/084316
(87) International publication number: WO 2013/100206

(56) References cited:
- EP-A2- 2 028 023
- WO-A1-2011/118856
- DE-A1-102004 010 060
- JP-A- H07 257 111
- JP-A- H07 257 111
- JP-A- H08 332 810
- JP-A- H08 332 810
- JP-A- 2002 067 621
- JP-A- 2002 248 911
- JP-A- 2010 260 406
- JP-A- 2010 260 406

## Description

### TECHNICAL FIELD

The present invention relates to tires and molds for forming the same, in particular, tires having excellent on-snow and on-ice performance, as well as molds for forming it.

### BACKGROUND ART

Conventionally, various contrivances have been made for the winter tires in order to improve on-ice and on-snow performance.

For example, Patent Document 1 discloses the technology in which a plural of sipes are provided in each brocks being formed on the tread, so as to increase the effect to catch the snowy road and to improve the driving performance on-ice and on-snow road (frozen and/or snow-covered road).

Further, Patent Document 2 discloses the technology relates to the tire having a tread comprising a cap rubber and a base rubber, which is so called cap-and-base structure, in which teaches to increase the water removal by using foamed rubber for the cap rubber so as to improve the on-ice and on-snow performance of such tire.

Moreover, Patent Document 3, for example, discloses the technology relates to the property of the tread surface of the tire in which teaches to increase the roughness of the tread surface and the frictional force between the tire surface and road surface by providing protrusions having pointed tip on the tread surface so as to improve the on-ice and on-snow performance of the tire.

JP H07 257117 discloses a known tire.

WO 2011/118856 discloses a tire having a specific arithmetic mean roughness. DE102004010060 discloses a tire with protrusions.

JP 2002 248911 discloses a tire that comprises a large number of minute projections on the surface of tire blocks.

JP 2010 260406 discloses a tire, a tire tread portion, is structured with a rubber composition that is vulcanized by sulphur.

JP H08 332810 discloses a tire with a tread face that comprises fine irregularities on the surface of each block of a block pattern.

### CITATION LIST

### (Patent Literature(s))

Patent Document 1: JP 2002-348222 A
Patent Document 2: JPH 11-301217 A
Patent Document 3: JP 2009-67378 A

### SUMMARY OF INVENTION

### (Technical Problem)

However, the technology according to Patent Document 1, which provides sipes in the blocks, encounters a problem that increased number of sipes in each blocks decreases the block rigidity so that the blocks tend to collapse. This reduces the ground contact area and degrades the on-ice and on-snow performance.

Further, the technology according to Patent Document 2, which uses foamed rubber as the cap rubber, may decrease rigidity of entire blocks and wear resistance of tire is not necessarily sufficient.

Moreover, the technology according to Patent Document 3, which provides peaked protrusions on the tread surface, may not obtain the desired performance in some times due to the low rigidity of the protrusions. In this case, the protrusions are crushed under large load, for example, as the load to the front tires is increased by nose dive of the vehicle. That is, in the technology to provide peaked protrusions on the tread surface, as shown in Fig (b), as the result of the protrusion 2 is crushed by contacting with the road surface, the volume of the void for the water removal is reduced, and then, the water removal aqueous decreases, desired on-ice and on snow performance cannot be obtained in some cases. Therefore, the referenced document has a room to improve the performance even more. Moreover, as the result of the further research on the tires by the inventor to which the technologies described in the Patent Document 1-3 are applied, it became to know that the conventional tire had a problem, though the cause is unknown, that the adequate on-ice and on-snow performance cannot be achieved especially when the tire is new. Thus, there is a room to improve the on-ice and on-snow performance of the tires, especially when it is brand new, as described in the Patent Document 1-3.

It is a primary object of the present invention to resolve the problem described above, and to provide a tire having improved on-ice and on-snow performance and a tire forming mold used for producing (forming) the tire.

### (Solution to Problem)

The inventor conducted through investigations seeking for solution of the above-mentioned problem.

As a result, it has been found that the conclusion, forming defined fine structures in the tread surface may suppress the decrease of the block rigidity and of water removal and to improve the on-ice and on-snow performance even more, further, to obtain adequate on-ice and on-snow performance even when it is new.

The present invention has been achieved based on the findings as above. According to an aspect of the present invention there is provided a tire as claimed in Claim 1.

The tire includes a tread surface formed at least partly with a plurality of protrusions having a hemispherical shape radially outwards of the tire, wherein each of the protrusions has a cross-sectional shape as seen in a tire width direction, said cross-sectional shape being part of a sine wave.

In this way, if the tread surface is (a surface which comes in contact with a road surface) formed at least partly with a plurality of protrusions having a convex shape radially outwards of the tire, it is possible to increase the frictional force between the road surface and the tread surface so as to improve the on-ice and on-snow performance of tire.

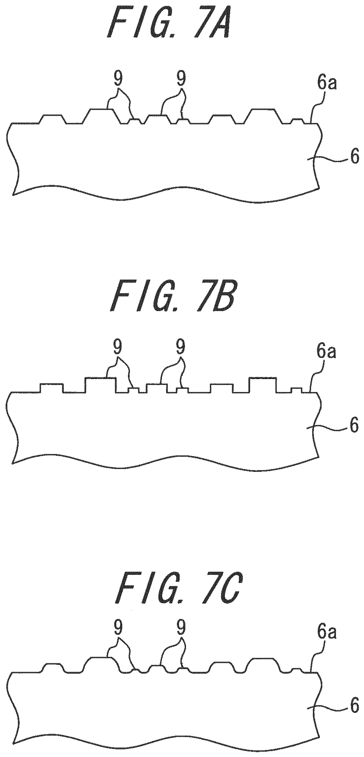

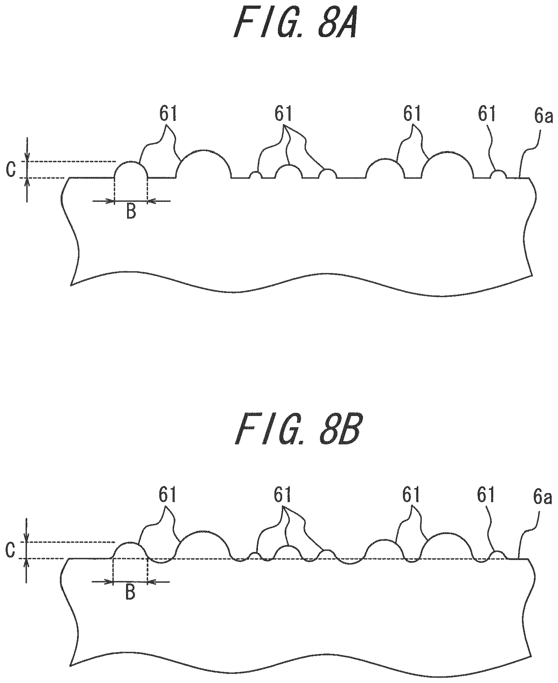

Further, due to the shape of the protrusions in a sectional view of the tire width direction has a shape forming a part of a sine wave, the rigidity of the protrusions are large, and then the water removal is ensured. Here, the term "sine wave" as used herein is defined as the wave shape shown in Fig.8(a),(b) in which peaks 61 appear repeatedly. The height C and the width B of the peaks 61 may be different among the peaks 61. Further, the phrase "forming part of a sine wave" is defined that the shape of each protrusions in a sectional view of the tire width direction (outline shape) has a shape corresponding to one of the peaks 61. Also disclosed are shapes of protrusions that vary and may have a trapezoidal cross section such as truncated conical and truncated pyramidal as shown in Fig.7(a), a rectangular cross section such as cylindrical and prismatic as shown in Fig.7(b), or a truncated hemispherical cross section.

According to another aspect of the present invention there is provided a mold for forming a tire as claimed in Claim 3.

Furthermore, the mold for forming a tire including a tread forming surface formed at least partly with a plurality of hemispherical depressions, wherein each of the depressions has a cross-sectional shape as seen in a tire width direction, said cross-sectional shape being part of a sine wave. In this way, due to forming the plural of depressions which have a shape forming a part of a sine wave at least partly in the tread forming surface of the tire mold, it is possible to provide the tire with excellent on-ice and on-snow performance having a plural of protrusions, at least a partly in the tread surface, of which cross sectional view in a tire width direction is a part of a sine wave.

Here, the term "sine wave" as used herein is defined as the wave shape shown in Fig.8(a),(b) in which peaks 61 appear repeatedly, with a height C and a width B that may be different among the peaks 61. Further, the term "forming part of a sine wave" is defined as the shape of each protrusions in a sectional view of the tire width direction (outline shape) having a shape corresponding to one of the peaks 61. In this way, if the outline shapes of the depressions in a sectional view of the tire width direction corresponds to one of the peaks 61, it is possible, as the shapes of the depressions are transferred to the tread surface, to form the plural of protrusions corresponding to the one of the peaks 61 as seen in a tire width direction in the tread surface. Also disclosed are depressions of the mold of various shape, such as a shape having trapezoidal cross section including truncated conical or truncated pyramidal cross section as shown in Fig.7(a), or a shape having a rectangular cross section such as cylindrical or prismatic shape as shown in Fig.7(b), a shape having a truncated hemispherical cross section.

### (Advantageous Effect of Invention)

The present invention thus provides a tire having excellent on-ice and on-snow performance, as well as a mold adapted for forming the same.

### BRIEF DESCRIPTION OF DRAWINGS

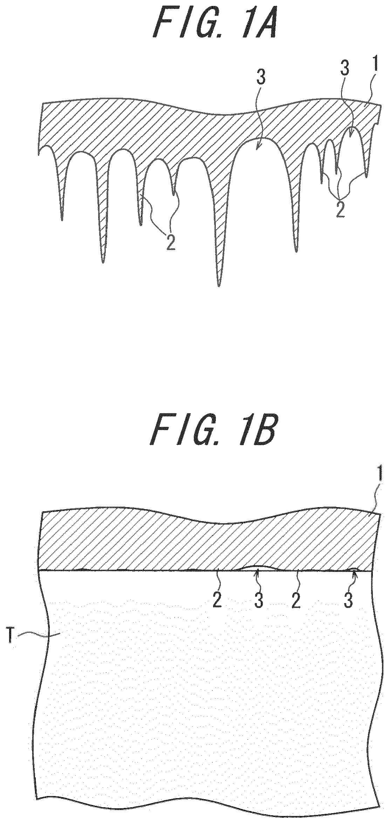

Fig.1 (a) is a schematic cross-sectional view showing a tread surface of a conventional tire, and Fig.1 (b) is a schematic cross-sectional view showing how the tread surface of the tire is in contact with a road surface under load.
Fig.2 is a sectional view, as seen in a tire width direction, showing the tire according to an embodiment of the present invention.
Figs. 3(a), (b) are partial views schematically showing, in enlarged scale, the shape of the tread surface of the tire according to an embodiment of the present invention, wherein Fig. 3(a) is a plane view and Fig. 3(b) is a sectional view along the tire width direction.

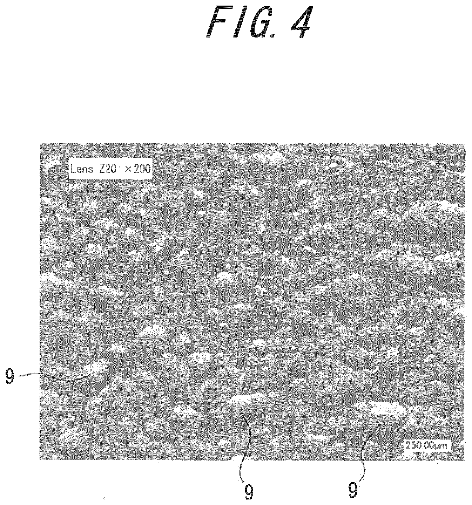

Fig.4 is a reproduction of an SEM image (scanning electron microscope image) showing a tread surface of a tire not according to the present invention.
Fig.5 is a partial perspective view schematically showing a part of the tire mold according to the present invention.
Figs.6(a), (b) are a partial views schematically showing, in enlarged scale, the shape of the tread forming surface of the tire mold illustrated in Fig.5; wherein Fig. 6(a) is a plane view and Fig. 6(b) is a sectional view of the tire width direction.
Figs.7(a) through (c) are other examples showing partial shape of a tread surface of a tire not according to the present invention.
Figs.8(a) and (b) are explanatory views showing the shape of the protrusions, Fig. 8(b) not being according to the present invention.
Figs.9(a), (b) are explanatory views showing the change in the ground contact area of the protrusion portion in the breaking state and stationary state.

### DESCRIPTION OF EMBODIMENTS

Now, explanation will be made of the tire and the tire mold according to embodiments of the present invention. The tire of embodiments of the present invention characterized by a tread surface (the surface which comes in contact with a road surface) at least partly with given fine structures so as to give a predetermined properties to the tread surface. The tire mold of embodiments of the present invention is used for manufacturing the tire of embodiments of the present invention and includes a mold inner surface, in particular, a tread forming surface formed at least partly with given fine structures so as to give a predetermined properties to the tread forming surface.

### (TIRE)

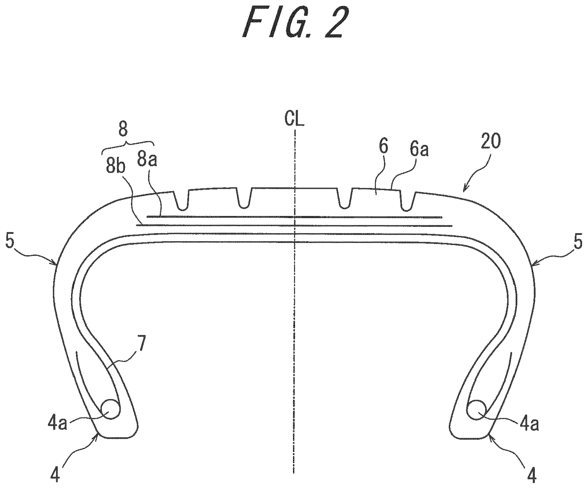

Fig.2 is a sectional view of the tire width direction showing the tire according to an embodiment of the present invention. As shown in Fig.2, the tire 20 of the present embodiment includes a pair of bead portions 4, a pair of sidewalls 5 extending radially outward from the pair of bead portions 4, and a tread portion 6 extending between the sidewalls 4.

The tire 20 of the present embodiment includes a carcass 7 extending in a toroidal shape between the pair of bead cores 4a, and a belt 8 configured by two belt layers 8a and 8b disposed at the radially outward of the carcass 7. Further, a tread rubber made of non-formed rubber is provided outward of the belt 8.

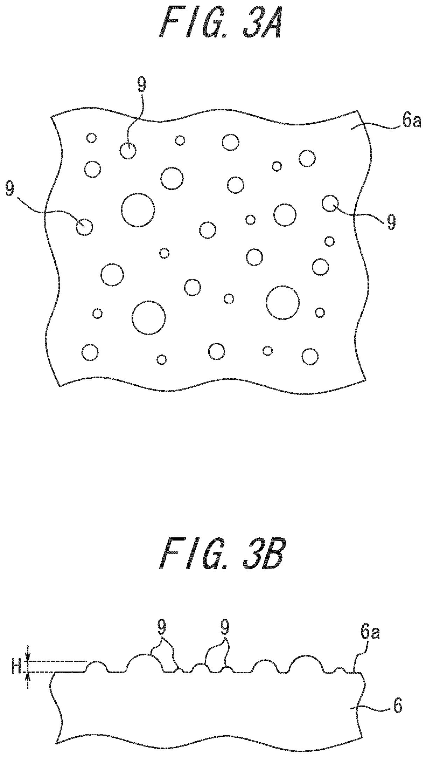

As mentioned above, the tire 20 includes a tread surface formed at least partly (to all in this embodiment) with predetermined fine protrusions. In particular, as shown in Fig.3(a) which describes the enlarged plane view of the tread surface 6a, and in Fig.3(b) which describes the enlarged widthwise sectional view of the side of the tread surface 6a, the tire according to the present embodiment includes a tread surface formed plurality of protrusions 9 which has a convex shape in the tire radial direction over the whole tread surface. The shape of the protrusions 9 in a sectional view of the tire width direction has a shape forming a part of a sine wave.

Due to being formed the plurality of protrusions 9 on the tread surface of the tire 20, it is possible to suppressing the decrease in water removal ability and reduction of block rigidity, and to sufficiently improve the on-ice and on-snow performance of tire.

That is, the plurality of protrusions 9 formed in this tire 20 make it possible to remove the water film, which arise when the tire grounds, by making use of the gap between the protrusions 9 (i.e. exhibit water removal). Further, it is possible to increase the frictional force between the road surface and the tread surface so as to improve the on-ice and on-snow performance of tire.

It is also possible to improve water removal property by securing pathway for water removal. That is because the shape of protrusions 9 in a sectional view of the tire width direction forming a part of a sine wave, therefore, the rigidity of the protrusions 9 is high enough to maintain its shape even under large load.

In the case of this tire 20, there is no need to form excess number of sipes on its tread surface nor to use formed rubber material for the tread rubber, since the improvement of water removal, performance on an ice and snow road is already achieved by forming the fine protrusions 9, which has predetermined shape, on the tread surface.

The tire 20 enables to sufficiently exhibit on-ice and on-snow performance even when the tire is quite new (unused state), though the reason is not clear.

Therefore, it is possible, according to the tire 20, to suppressing the decrease in water removal and reduction of block rigidity, and even when it is new, to sufficiently improve the on-ice and on-snow performance of tire.

The shape of protrusions 9 of the tire 20 is preferably hemispherical. The reason is that the hemispherical protrusions 9 is hardly collapsed and enable to ensure water removal.

Further, the height H of the protrusions 9 which are formed on the tread surface is preferably 1-50 *µ*m. If the height H of the protrusion 9 is more than 1 *µ*m, the void having sufficient volume between the protrusions 9 is ensured so as to improve water removal. If the height H of the protrusions 9 is less than 50 *µ*m, the rigidity of the protrusions 9 are increased so as to ensure sufficient water removal.

The height of the protrusions 9 refer to the distance between the first virtual plane perpendicular to the tire radial direction line which extends though the distal end (the radial outer end) of the protrusion 9 and the second virtual plane which is closest to the first virtual plane among the virtual planes which are perpendicular to the tire radial direction line and in contact with the outer contour of the protrusion 9.

The height of the protrusion 9 is measured by SEM or microscope.

According to embodiments of the present invention, it is preferable, for a tire including a tread surface formed at least partly with a plurality of protrusions, that the ratio of ground contact area S2 when the weight load is 5.7kN to ground contact area S1 when the weight load is 4.3kN, S2/S1, is not less than 1.10 and no more than 1.40.

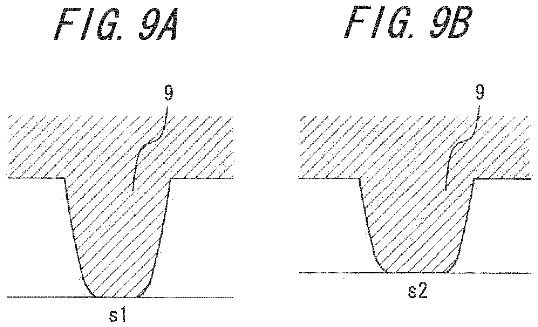

Generally, it is know that the weight load on the tread surface during breaking a vehicle on which the tires are mounted (e.g. 5.7kN) is larger than that of during non-breaking (e.g. 4.3kN) when compared. Therefore, the load weight on the small protrusions 9 during breaking the vehicle is also larger than that of during non-breaking, and thus, compression toward the tire width direction of the protrusions 9 during breaking the vehicle becomes larger than that of during non-breaking. Fig.9(a) shows the enlarged sectional view taken along with the tire width direction of a fine protrusion 9 of the tire, during non-breaking, according to embodiments of the present invention. The ground contact area of the tip of the fine protrusion 9 during non-breaking is represented by s1. Fig.9(b) shows the enlarged sectional view taken along with the tire width direction of a fine protrusion 9 of the tire, during breaking, according to embodiments of the present invention. The ground contact area of the tip of the fine protrusion 9 during non-breaking is represented by s2. Then, the s2 is significantly increased compared with s1 when the tire moved to the breaking state from the non-breaking state. When the area forming a tread surface though non-braking state and braking state is defined as a region R, the total ground contact area (non-braking state) of the tips of the number of fine protrusions 9 formed in the region R is defined as S1, and the total ground contact area (braking state) is defined as S2, it is preferable, for the tire 20 according to the present embodiment, that the ratio of the ground contact area under braking state S2 to that of under non-braking state S1 (S2/S1) significantly becomes larger with the increase in the applied load. Especially, it is preferable to have an ratio S2/S1 within a range of 1.10 to 1.40. This is due to the rounded shape of the tip of the fine protrusion 9.

As measuring the ground contact area, the contact pressure distribution of the tread surface of the test tire is firstly measured by grounding it on the table of the measuring device on which a pressure sensor and/or a pressure mat is arranged. Then, calculating the area of the region which has ground pressure value above predetermined threshold (0kPa) in given region R being a tread surface during both breaking state and non-braking state. This area is defined as the ground contacting area.

As mentioned above, with the configuration that the ground area is significantly increased during braking state in comparison with stationary state, the frictional force between the tire and iced and/or snowed road surface is significantly increased in association with the increase in contact area during braking state as compared to non-braking state. As a result, the braking performance on icy and/or snowy road may be improved while maintaining the driving performance on it. That is, if the ratio S2/S1 is not less than 1.0, the ground contact area may be increased enough during braking state in comparison with during non-braking state, and thus the braking performance on the icy and/or snowy road may be adequately improved enough.

If the ratio S2/S1 is not more than 1.40, the uniformity of ground contact pressure is kept so as to the stable vehicle behavior may be maintained without making. More preferably, the ratio S2/S1 is 1.10-1.3 for the same reason.

In the measurement of the "ground contact area", the tire is firstly embedded in the application rim defined in JATMA standards or the like, filled with maximum air pressure defined in the same or like according to the tire size, and then, measuring the ground pressure distribution by putting the test tire on a table of the measuring device on which a pressure mat and/or pressure sensor is arranged. The term "ground contact area" is defined as the area of the region having a contact pressure more than the predetermined threshold (0kPa), which is a part of the area being tread surface during both breaking and non-braking state and the plural of protrusions are formed.

Preferably, the ten-point average roughness Rz of the tread surface forming the hemispherical protrusion is 1.0-50 *µ*m.

The reason is that, if the Rz is not less than 1.0 *µ*m, it is possible to secure a gap for dewatering, on the other hand, if the Rx is not more than 50 *µ*m, it is possible to secure the contact area with the road surface. With these, further improvement for the on-ice and/or no-snow performance may be realized.

The term "ten-point average roughness Rx" is defined as the value measured according to the provision of JIS B 0601 (1994), and is obtained under the condition that the reference length is 0.8mm and the evaluation length is 4mm.

The mean spacing S between the local tops of the protrusion 9 formed on the tread surface of the tire is 5.0-100 *µ*m.

The reason is that, if the interval S is more than 5.0 *µ*m, the void for water removal may be assured and if the interval S is less than 100 *µ*m, the contact area with the road may be assured. With these, further improvement of the on-ice and on-snow performance of tire may be realized.

The term "average interval of the local top", in turn, is defined as the value measured according to the provision of JIS B 0601 (1994), and is obtained under the condition that the reference length is 0.8 *µ*m and the evaluation length is 4mm.

The aforementioned tire may be manufactured without being limited by using the tire mold described below, though this is not a prerequisite condition.

Note, that the formation of tires using the tire mold described below may be performed in a conventional manner.

### (Tire Forming Mold)

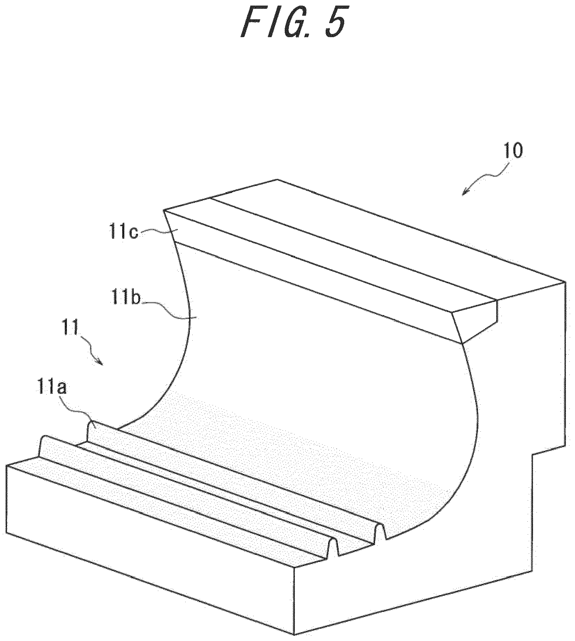

Fig.5 is a partial perspective view schematically showing a part of the tire mold according to an embodiment of the present invention.

As shown in Fig.5, the mold 10 comprises a forming surface 11 to vulcanize a tire.

This forming surface 11 includes a tread forming surface 11a, a sidewall forming surface 11b, and also a bead forming surface 11c in the shown example.

This forming surface 11, for example, may be formed of aluminum though not particularly limited.

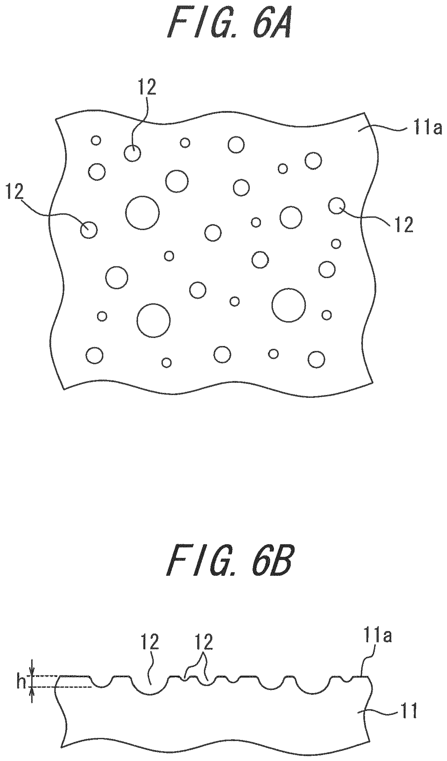

The tread surface of the tire according to embodiments of the present invention having the above properties is formed by the tire mold 10 including the tread forming surface 11a having a surface geometry corresponding to the tire's surface properties. In particular, as shown in Fig.6(a) which is an enlarged plane view of the tread forming surface 11a of the tore forming mold 10, and Fig.6(b) which is an enlarged sectional view along with the tire width direction of the tread forming surface 11a thereof, the tire forming mold 10 according to the present embodiment has a plurality of depressions over the entire tread forming surface 11a and each of the depressions has a cross-sectional shape, being part of a sine wave, as seen in the tire width direction. That is, in the tire vulcanization step using this mold 10, the shape of the tread forming surface 11a of the mold 10 is transferred onto the tread surface as the shape of the tread surface of the tire.

Then, on the tread surface of the manufactured tire, a plural of protrusions 9 which have a cross-sectional shape being part of a sine wave as seen in the tire width direction are formed. Thus, it is possible to form a tire having excellent on-ice and on-snow performance.

The explanation for the method how to form the tread forming surface 11a of the mold 10 will be made below.

The tread forming surface 11a may be made by the projectile projecting step in which the projectile in a specific shape is collided to the tread forming surface. The tire forming mold which is made through this projectile projecting step comprises a tread forming surface on which exists many depressions 12 having a cross-sectional shape being part of a sine wave as seen in the tire width direction as mentioned above. And therefore, the tread surface which is vulcanized by using this mold becomes the one which comprises the many protrusions having a cross-sectional shape being part of a sine wave as seen in the tire width direction as mentioned above.

Now, in this projectile projecting step, the tread forming surface 11a (entire surface or a part of it) is preferably made by projecting and colliding a projectile which has a sphericity not more than 15 *µ*m.

The reason is, by doing so, it is possible to form many depressions having desired property on a tread forming surface of the mold and also to form a tread surface having a desired geometry by using the mold.

More preferably, the sphericity of the projectile is not more than 10 *µ*m. If the sphericity of the projectile is not more than 10 *µ*m, it is possible to easily form many depressions having desired property on the tread forming surface of the mold, and owing to that, it is also possible to form many protrusions having desired geometry on the tread surface of the tire which is manufactured by using the mold. As a result, it is possible to form the tire having more excellent on-ice and on-snow performance.

Preferably the sphericity of the projectile is not more than 5 *µ*m.

This makes it easier to form depressions of desired properties on the tread forming surface.

Now, the average particle size of the projectile used for the projectile projecting step is preferably between 10 *µ*m-1mm.

The reason is that if the average particle size of the projectile is not less than 10 *µ*m, the mold having desired depression geometry on the tread forming surface is easily obtained, and it is also possible to prevent the projectile from being scattered around as projected under high pressure in the projectile projecting step. On the other hand, if the average size of the projectile is not more than 1mm, it is possible to suppress premature abrasion of the mold surface.

For the same reason, the average particle size of the projectile is preferably between 20 *µ*m-0.7mm, more preferably between 30 *µ*m-0.5mm.

Now the "average particle size" is determined by taking pictures of projectile by SEM, selecting 10 projectiles arbitrarily, calculating the average of diameter of inscribed circles and circumscribed circles of each of 10 projectiles, and then, averaging them among these 10 projectiles.

Preferably the Mohs hardness of the projectile is between 2-10.

The reason is that, if the Mohs hardness is not less than 2, it becomes easier to make mold having desired shaped depression on the tread forming surface. On the other hand, if the Mohs hardness is not more than 10, it is possible to reduce the damage of mold in early stage.

For the same reason, the Mohs hardness of the projectile is preferably between 3.0-9.0, and more preferably between 5.0-9.0.

The Mohs hardness of the projectile is preferably between 2.0-5.0, more preferably between 3.0-5.0.

Further, the specific gravity of the projectile is preferably between 0.5-2.0. Because if the specific gravity of the projectile is not less than 0.5, it is possible to prevent the projectile from being scattered around as projected and to improve operability. On the other hand, the specific gravity of the projectile is not more than 20, it is possible to reduce the energy to accelerate the projectile and to suppress early abrasion of the mold surface.

For the same reason, the specific gravity of the projectile is preferably between 0.8-1.8, and more preferably between 1.2-15.

Here, the material of the projectile is no limited, however, it is preferable to use silicon, iron, cast steel, ceramics, and so on.

In the projectile projection step, it is preferable to project the projectile to the tread forming surface of the mold at high-pressure air of 100-1000kPa for 30 seconds to 10 minutes.

The reason is that if the projectile is projected at not less than 100kPa for not less than 30 seconds, it is possible to make all over the tread forming surface to be desired geometry, on the other hand, if the projectile is projected at not more than 1000kPa and for not more than 10 minutes, it is possible to suppress the damage on the tread forming surface.

Further, it is preferable to adjust the specific gravity of the projectile and projection pressure so as to set the velocity of the projectile being between 0.3-10 (m/s), and more preferably being between 0.5-7 (m/s)

In this case, it is preferable that the distance between a nozzle of the projectile and the tire forming mold is between 50-200 (mm).

Here, the projection time of the projectile refers the projection time per a mold. Thus, incase of forming a tire by using nine molds, for example, it is preferable to project the tread forming surface, of single tire being comprised by nine molds, for totally 270 seconds to 90 minutes.

The projection of the projectile to the tread forming surface of single mold may be proceeded while shifting the position where to be projected by an operator. By doing so, the projectile can be more uniformly projected.

It is preferable that the depression 12 of this mold 10 is hemispherical in shape. If the shape of the depression 12 is hemispherical, it is possible to form hemispherical protrusion 9 on the tread surface of tire. The shape of depression 12 may be controlled by adjusting the particle size, jet velocity, and projection angle of the projectile.

Further, it is preferable that the depth h of the depression of this mold 10 is between 1-50 *µ*m. If the depth h of the depression 12 is between 1-50 *µ*m, it is possible to form protrusion 9 which has height of between 1-50 *µ*m on the tread surface of the tire. The depth h of the depression 12 may be controlled by adjusting the projection velocity of the projectile. In specific, the larger projection velocity may make the depth h larger.

Here, the depth of the depression 12 refers the distance, along the radial direction, between the third virtual plane which is perpendicular to the radial line extending trough the deepest point (radial inner end) of the depression 12 and the forth virtual plane being closest to the third virtual plane among virtual planes which contact with the outside counter of the depression 12 and is perpendicular to the above radial line. In this connection, the term "radial direction" refers the radial direction of the circular tread forming the tread surface, that is, the direction corresponds to the tire radial direction of the tire formed by using the mold 10.

The depth of depression 12 may be measured by SEM and/or microscope.

Here, the ten-point average roughness Rz of the tread forming surface of a mold is between 1.0-50 *µ*m. Because the tire having ten-point average roughness Rz of a tread surface is between 1.0-50 *µ*m may be formed.

If the average particle diameter of the projectile used in the projectile projection step is between 50-400 *µ*m, it is possible to provide the tire forming mold comprises a tread forming surface having ten-point average roughness Rz is in the above range.

The mean spacing between the local tops of depressions of the tread forming surface of mold is 5.0-100 *µ*m. Because the tire having the average interval S between the local tops of the protrusions formed on the tread surface is between 5.0-10 *µ*m.

If the average particle diameter of the projectile used in the projectile projection step is between 50-400 *µ*m, it is possible to provide the tire forming mold having the average interval S is in the above range.

### Examples

The present invention will be described in further details below with the reference to specific examples, though the present invention is not limited to such examples.

### (Manufacturing of the Tire Forming Mold)

The tire forming molds 1-5 having tread forming surfaces, which properties are shown in the Table 1, were manufactured. They are manufactured by projecting the projectile (ceramic) to the tread forming surface of the tire forming mold made of aluminum. The projection condition (projection pressure, projection velocity, and so on) applied to each tire was changed. The surface properties of manufactured tread forming surface ware measured by SEM and microscope.

**[Table 1]**

| | Mold 1 | Mold 2 | Mold 3 | Mold 4 | Mold 5 |
|---|---|---|---|---|---|
| | Comp. | Comp. | Inv. | Inv. | Inv. |
| Presence of depression | No | Yes | Yes | Yes | Yes |
| Shape of depression | - | Sharp (Apex) | Hemisphere | Hemisphere | Hemisphere |
| Bottom shape of depression | - | Sharp (Apex) | Hemisphere | Hemisphere | Hemisphere |
| Sectional shape of depression | - | Not part of sine wave | Part of sine wave | Part of sine wave | Part of sine wave |

### (Manufacturing Tire)

Tires 1-5 having size 205/55R16 were manufactured in a conventional manner by using the manufactured tire forming molds 1-5. The surface geometries of the tread surface in the manufactured tires were measured by SEM and microscope. The result are shown in Table 2.

### (Performance on Icy Road)

The tire soon after being manufactured was embedded in the application rim defined in JATMA, filled with specified air pressure defined in the same, and mounted to a vehicle. Then, measured the coefficient of friction under the condition that the load per a front tire was set to 4.3kN, tested on an iced road, and speed was 30km/h. The coefficient of friction of each tire on iced road was evaluated as 100 index of that of the tire 1. The result in table 2 shows that the larger number indicates large coefficient of friction on iced road and it means having excellent performance on icy road.

### (Performance on Snowy Road)

The tire soon after being manufactured was fitted to an applicable rim as defined by JATMA standards, filled with a specified air pressure as defined by the same, and mounted to a vehicle. Then, the coefficient of friction was measured under the condition that the load per a front tire was set to 4.3kN, tested on an iced road, and speed was 30km/h. The coefficient of friction of each tire on snowy road was evaluated with that of the tire 1 as index 100. The results in Table 2 indicate that the larger number indicates large coefficient of friction on snowed road and it means having excellent performance on snowy road.

**[Table 2]**

| | Tire 1 | Tire 2 | Tire 3 | Tire 4 | Tire 5 |
|---|---|---|---|---|---|
| | Comv. | Comp. | Inv. | Inv. | Inv. |
| Presence of protrusion | No | Yes | Yes | Yes | Yes |
| Shape of protrusion | - | Sharp (Apex) | Hemisphere | Hemisphere | Hemisphere |
| Shape of protrusion top | - | Sharp (Apex) | Hemisphere | Hemisphere | Hemisphere |
| Ratio of contact area (load weight 5.7kN / load weight 4.3kN) | - | 1.08 | 1.25 | 1.2 | 1.18 |
| Sectional shape of protrusion | - | Not part of sine wave | Part of sine wave | Part of sine wave | Part of sine wave |
| Performance on iced road | 100 | 102 | 115 | 112 | 110 |
| Performance on snowed road | 100 | 101 | 112 | 110 | 108 |

It is obvious that the tire according to the present invention is superior to both conventional and comparative tire regarding on-ice and on-snow performance.

### INDUSTRIAL APPLICABILITY

According to the present invention, it is possible to provide a tire having improved on-ice and on-snow performance, and tire forming mold which may form the same.

### Reference Numerals

- 1: Tread portion
- 2: Protrusion portion
- 3: Void
- 4: Bead portion
- 4a: Bead core
- 5: Sidewall portion
- 6: Tread portion
- 7: Carcass
- 8: Belt
- 8a, 8b: Belt layer
- 9: Protrusion portion
- 10: Mold
- 11: Forming surface
- 11a: Tread forming surface
- 11b: Sidewall portion forming surface
- 11c: Bead portion forming surface
- 12: Depression portion
- 20: Tire

## Claims

1. A tire including a tread surface (6a) formed at least partly with a plurality of protrusions (9) having a convex shape radially outwards of the tire, wherein each of the protrusions (9) has a cross-sectional shape as seen in a tire width direction, said cross-sectional shape being part of a sine wave, wherein the protrusions (9) have a hemispherical shape;
wherein the ten-point average roughness Rz of the tread surface having the hemispherical protrusions is 1.0-50µm when determined according to the regulations of JIS B0601(1994) under a condition of a reference length being 0.8mm and an evaluation length being 4mm; and
wherein a mean spacing S between peaks of the projections is in the range of 5µm to 100µm;
and wherein gaps are arranged between the protrusions (9).

2. A tire according to Claim 1, wherein a ratio S2/S1 between a ground contact area S2 when a weight load on the tire is 5.7 kN to ground contact area S1 when a weight load on the tire is 4.3 kN is no less than 1.10 and no more than 1.40.

3. A mold (10) for forming a tire including a tread forming surface (11a) formed at least partly with a plurality of depressions (12), wherein each of the depressions (12) has a cross-sectional shape as seen in a tire width direction, said cross-sectional shape being part of a sine wave, wherein the depressions (12) have a hemispherical shape;
wherein the ten-point average roughness Rz of the tread forming surface of the mold having the hemispherical depressions is 1.0-50µm when determined according to the regulations of JIS B0601(1994) under a condition of a reference length being 0.8mm and an evaluation length being 4mm; and
wherein a mean spacing S between peaks of the recessed portions is in the range of 5µm to 100µm;
and wherein gaps are arranged between the depressions (12).

4. The mold (10) according to claim 3 wherein the tread forming surface (11a) is formed via a projectile projecting step in which the projectile in a specific shape is collided to the tread forming surface.

5. The mold (10) according to claim 4 wherein the forming surface (11a), entirely or partially, is made by projecting and colliding a projectile which has a sphericity not more than 15 *µ*m.

6. The mold (10) according to claim 4 wherein the average particle size of the projectile used for the projectile projecting step is between 10 *µ*m-1mm.

7. The mold (10) according to claim 4 wherein the specific gravity of the projectile is 0.5 to 20.

## Patentansprüche

1. Reifen, umfassend eine Laufflächenoberfläche (6a), mindestens teilweise gebildet mit einer Vielzahl von Vorsprüngen (9), welche eine konvexe Form radial auswärts vom Reifen besitzen, wobei jeder der Vorsprünge (9) eine in einer Reifenbreitenrichtung sichtbare Querschnittsform besitzt, wobei die Querschnittsform Teil einer Sinuswelle ist, wobei die Vorsprünge (9) eine Halbkugelform besitzen;
wobei die über zehn Punkte gemittelte Rauheit Rz der Laufflächenoberfläche, welche die halbkugelförmigen Vorsprünge besitzt, 1,0 bis 50 µm beträgt, wenn sie nach den Regelungen von JIS B0601(1994) unter der Voraussetzung einer Bezugslänge von 0,8 mm und einer Bewertungslänge von 4 mm ermittelt wird; und
wobei ein mittlerer Abstand S zwischen Spitzen der Vorsprünge in dem Bereich von 5 µm bis 100 µm liegt;
und wobei
Lücken zwischen den Vorsprüngen (9) angeordnet sind.

2. Reifen nach Anspruch 1, bei welchem ein Verhältnis S2/S1 zwischen einer Bodenkontaktfläche S2 bei einer Gewichtsbelastung des Reifens von 5,7 kN und einer Bodenkontaktfläche S1 bei einer Gewichtsbelastung des Reifens von 4.3 kN nicht kleiner als 1,10 und nicht größer als 1,40 ist.

3. Form (10) zum Formen eines Reifen, umfassend eine Laufflächenformfläche (11a), mindestens teilweise gebildet mit einer Vielzahl von Vertiefungen (12), wobei jede der Vertiefungen (12) eine in einer Reifenbreitenrichtung sichtbare Querschnittsform besitzt, wobei die Querschnittsform Teil einer Sinuswelle ist, wobei die Vertiefungen (12) eine Halbkugelform besitzen;
wobei die über zehn Punkte gemittelte Rauheit Rz der Laufflächenformfläche der Form, welche die halbkugelförmigen Vertiefungen besitzt, 1,0 bis 50 µm beträgt, wenn sie nach den Regelungen von JIS B0601(1994) unter der Voraussetzung einer Bezugslänge von 0,8 mm und einer Bewertungslänge von 4 mm ermittelt wird; und
wobei ein mittlerer Abstand S zwischen Spitzen der vertieften Abschnitte in dem Bereich von 5 µm bis 100 µm liegt;
und wobei
Lücken zwischen den Vertiefungen (12) angeordnet sind.

4. Form (10) nach Anspruch 3, bei welcher die Laufflächenformfläche (11a) durch einen Schritt des Projizierens eines Projektils gebildet wird, bei welchem das Projektil in einer spezifischen Form mit der Laufflächenformfläche zur Kollision gebracht wird.

5. Form (10) nach Anspruch 4, bei welcher die Formfläche (11a) ganz oder teilweise hergestellt wird, indem ein Projektil projiziert und zur Kollision gebracht wird, welches eine Kugeligkeit von nicht über 15 µm besitzt.

6. Form (10) nach Anspruch 4, bei welcher die mittlere Partikelgröße des im Schritt des Projizierens des Projektils benutzten Projektils zwischen 10 µm und 1 mm beträgt.

7. Form (10) nach Anspruch 4, bei welcher das spezifische Gewicht des Projektils 0,5 bis 20 beträgt.

## Revendications

1. Pneumatique incluant une surface de bande de roulement (6a) qui est formée au moins partiellement de manière à ce qu'elle comporte une pluralité de protubérances (9) qui présentent une forme convexe radialement vers l'extérieur du pneumatique, dans lequel chacune des protubérances (9) présente une forme en coupe transversale telle que vue dans une direction de largeur de pneumatique, ladite forme en coupe transversale étant une partie d'une onde sinusoïdale, dans lequel les protubérances (9) présentent une forme hémisphérique ;
dans lequel la rugosité moyenne en dix points Rz de la surface de bande de roulement qui comporte les protubérances hémisphériques est de 1,0 à 50 µm lorsqu'elle est déterminée conformément aux réglementations de JIS B0601 (1994) sous la condition constituée par une longueur de référence qui est de 0,8 mm et par une longueur d'évaluation qui est de 4 mm ; et
dans lequel un espacement moyen S entre des crêtes des protubérances est dans la plage de 5 µm à 100 µm ;
et dans lequel :
des espaces sont agencés entre les protubérances (9).

2. Pneumatique selon la revendication 1, dans lequel un rapport S2/S1 entre une aire de contact avec le sol S2 lorsqu'une charge de poids sur le pneumatique est de 5,7 kN sur une aire de contact avec le sol S1 lorsqu'une charge de poids sur le pneumatique est de 4,3 kN n'est pas inférieur à 1,10 et n'est pas supérieur à 1,40.

3. Moule (10) pour former un pneumatique qui inclut une surface de formation de bande de roulement (11a) qui est formée au moins partiellement de manière à ce qu'elle comporte une pluralité de dépressions (12), dans lequel chacune des dépressions (12) présente une forme en coupe transversale telle que vue dans une direction de largeur de pneumatique, ladite forme en coupe transversale étant une partie d'une onde sinusoïdale, dans lequel les dépressions (12) présentent une forme hémisphérique ;
dans lequel la rugosité moyenne en dix points Rz de la surface de formation de bande de roulement du moule qui comporte les dépressions hémisphériques est de 1,0 à 50 µm lorsqu'elle est déterminée conformément aux réglementations de JIS B0601 (1994) sous la condition constituée par une longueur de référence qui est de 0,8 mm et par une longueur d'évaluation qui est de 4 mm ; et
dans lequel un espacement moyen S entre des crêtes des sections évidées est dans la plage de 5 µm à 100 µm ;
et dans lequel
des espaces sont agencés entre les dépressions (12).

4. Moule (10) selon la revendication 3, dans lequel la surface de formation de bande de roulement (11a) est formée via une étape de projection de projectile selon laquelle le projectile selon une forme spécifique entre en collision avec la surface de formation de bande de roulement.

5. Moule (10) selon la revendication 4, dans lequel la surface de formation (11a), entièrement ou partiellement, est constituée en projetant et en faisant entrer en collision un projectile qui présente une sphéricité non supérieure à 15 µm.

6. Moule (10) selon la revendication 4, dans lequel la taille moyenne des particules du projectile qui est utilisé pour l'étape de projection de projectile est entre 10 µm et 1 mm.

7. Moule (10) selon la revendication 4, dans lequel le poids spécifique du projectile est de 0,5 à 20.
